# FASCICULE DE BREVET EUROPEEN

(11) **EP 4 101 569 B1**
(45) Date de publication et mention de la délivrance du brevet: **27.12.2023**
(21) Numéro de dépôt: 21178605.8
(22) Date de dépôt: 09.06.2021
(51) Int. Cl.: B23G 1/04

(54) **PROCÉDÉ DE FILETAGE**
GEWINDESCHNEIDEVERFAHREN
THREADING METHOD

(43) Date de publication de la demande: 14.12.2022
(73) Titulaire: Tornos SA, 2740 Moutier (CH)
(72) Inventeur: Dolci, Marco, 2735 Bévilard (CH)
(74) Mandataire: BOVARD AG

(56) Documents cités:
- WO-A1-2004/022270
- WO-A1-2008/109690
- US-A- 5 544 556
- US-A1- 2014 251 096

## Description

### Domaine technique de l'invention

L'invention concerne un procédé de réalisation d'un filetage intérieur ou extérieur sur une surface à usiner cylindrique, conique ou tronconique d'une pièce de tournage, en particulier d'une pièce décolletée. WO 2004/022270 décrit un procédé selon le préambule de la revendication 1.

### État de la technique

En tournage, on entend généralement par «filetage» l'opération consistant à réaliser un filet sur la face d'un cylindre, d'un cône ou d'un tronc de cône.

Le filet considéré dans sa globalité est également appelé «filetage». Ce filetage est parfois appelé «filetage extérieur», par opposition à un «filetage intérieur», réalisé par usinage d'un filet à l'intérieur d'une pièce cylindrique, d'un cône ou d'un tronc de cône. Cette opération d'usinage intérieur est elle-même parfois appelée «taraudage».

Traditionnellement, pour réaliser un filetage extérieur, on utilise un outil appelé «burin» avec lequel on exécute une succession de passes dans la matière d'une pièce, en calant l'avance de l'axe longitudinal sur la rotation de la broche ou du mandrin. A la fin de chaque passe d'usinage, le burin se dégage de la pièce par un mouvement de retrait, effectue un déplacement relatif sensiblement parallèle à la surface qu'il vient d'usiner pour se repositionner au point de départ, il se rapproche ensuite du centre de rotation de la pièce par rapport à la passe précédente, se synchronise en une fraction de seconde pour retomber dans le pas du filet et lance la passe suivante. Ceci est répété jusqu'à atteindre une profondeur de passe qui rende le filet sur la pièce conforme aux exigences de dimension et d'aspect. Pendant toute l'opération, la broche ne cesse de tourner à la même vitesse et dans le même sens.

Pour un filetage intérieur, la différence principale est que l'on s'éloigne du centre de rotation de la pièce au fur et à mesure des passes consécutives.

Ceci est d'ailleurs historiquement la principale raison d'effectuer ces filetages de cette manière. Les inversions de sens de rotations de la pièce en décolletage étaient jusqu'à l'utilisation récente des motobroches comme système d'entrainement des pièces de décolletage plus long en temps que le retour à vide des burins pour se replacer. Mais la dynamique bien plus importante des motobroches, qui ont été introduites en série dans les machines actuelles pour d'autres raisons, n'avait pour le moment pas mené à une réflexion sur le processus de filetage.

La réalisation d'opérations de filetage traditionnels représente régulièrement une part importante du temps d'usinage pour des pièces de tournage, en particulier des pièces de décolletage.

Il existe aujourd'hui des appareils spécifiques de tourbillonnage qui permettent de réduire les temps de filetage Cela implique un investissement préalable, une mise en service et un réglage plus long lors du changement de pièce. Et surtout, certaines contraintes d'encombrement ne permettent pas d'utiliser ces appareils pour toutes les surfaces à fileter.

Lors de la réalisation du filetage, de nombreux paramètres doivent être pris en compte, notamment :
- le sens du filet (pas à droite ou à gauche),
- le nombre de passes,
- la hauteur ou profondeur des passes,
- les dimensions du filet (diamètre, longueur, conique,...)
- le pas du filet,
- le mode et l'angle de pénétration de l'outil dans la matière, et
- le sens d'usinage (sens d'enlèvement de la matière).

### Résumé de l'invention

L'invention a pour but principal de réduire le temps du cycle de réalisation d'un filetage et ainsi de permettre un rythme de production de pièces usinées plus important réduisant ainsi les coûts de production.

Ce but principal est atteint au moyen d'un procédé de réalisation d'un filetage sur une pièce à usiner cylindrique, conique ou tronconique, comprenant les étapes consistant à :
a) entraîner en rotation la pièce à usiner dans un sens A,
b) effectuer un déplacement relatif d'une première arête de coupe d'un outil par rapport à la pièce à usiner, jusqu'à ce que cette première arête de coupe affleure la surface à fileter de la pièce à usiner, au début de la section à fileter,
c) effectuer un déplacement relatif de l'outil par rapport à la pièce afin que la première arête de coupe usine la pièce à usiner,
d) effectuer un déplacement relatif de l'outil suivant l'axe longitudinal de la pièce à usiner, dans un sens L jusqu'à la fin de la section à fileter,
e) éloigner par un déplacement relatif la première arête de coupe de l'outil de la pièce à usiner,
ce procédé se distinguant en ce qu'il comprend en outre les étapes consistant à :
f) inverser la rotation de la pièce à usiner pour entraîner cette pièce en rotation dans le sens B opposé au sens A, tout en positionnant ou pas la seconde arête de coupe,
g) approcher par un déplacement relatif une deuxième arête de coupe vers la pièce à usiner, jusqu'à ce que cette deuxième arête de coupe pénètre dans le pas du filet,
h) effectuer un déplacement relatif de la deuxième arête de coupe par rapport à la pièce afin qu'elle poursuive l'usinage du filet dans cette pièce,
i) effectuer un déplacement relatif de la deuxième arête de coupe dans un sens M opposé au sens L, jusqu'au début de la section à fileter,
j) éloigner par un déplacement relatif la deuxième arête de coupe de la pièce à usiner,
k) inverser la rotation de la pièce à usiner, tout en positionnant ou pas la première arête de coupe puis
l) répéter les étapes b) à k) en poursuivant l'usinage du filet, jusqu'à ce que le filetage atteigne ses dimensions finales, en positionnant à l'étape b) la première arête de coupe de telle manière qu'elle pénètre dans le pas du filet déjà usiné.

Grâce à un tel procédé, et selon différents paramètres non exclusifs tels que matière et longueur du tronçon à fileter, il est possible de réduire le temps nécessaire au filetage de 5 à près de 45% par rapport aux procédés connus de l'art antérieur. En effet, le fait de produire le filetage le long des deux directions de translation de l'outil de filetage par rapport à la pièce à usiner permet d'éviter à l'outil de faire un déplacement à vide pour revenir au début du tronçon à fileter.

Dans un premier mode de réalisation préféré de la présente invention, les première et deuxième arêtes de coupe se trouvent sur le même outil. Ceci permet de réduire encore plus le temps nécessaire au filetage car le temps nécessaire au changement d'outil est minimisé.

Dans un deuxième mode de réalisation préféré de la présente invention, la première arête de coupe se trouve sur un premier outil et la deuxième arête de coupe sur un deuxième outil. Ceci permet de pouvoir approcher la pièce à fileter de deux côtés différents par les outils ce qui permet également de réduire le temps d'usinage tout en utilisant des arêtes de coupes standard du commerce.

Dans un autre mode de réalisation préféré de la présente invention, le premier outil est porté par un premier porte-outils et le deuxième outil est porté par un deuxième porte-outils. Toute les machines n'offrent pas cette opportunité qui est très intéressante pour répartir le flux de copeaux.

Dans un mode de réalisation préféré suivant de la présente invention, le premier porte-outils et le deuxième porte-outils sont montés sur le même ensemble d'outils.

Dans un encore autre mode de réalisation préféré de la présente invention, le premier porte-outils est monté sur un premier ensemble d'outils et le deuxième porte-outils est monté sur un deuxième ensemble d'outils.

Dans un mode de réalisation préféré suivant de la présente invention, un troisième outil avec une troisième arête de coupe et un quatrième outil avec une quatrième arête de coupe sont prévus sur un deuxième ensemble d'outils, les premier et troisième outils fonctionnant simultanément et de la même manière, tout comme les deuxième et quatrième outils.

Dans un autre mode de réalisation préféré de la présente invention, dans le cas d'une pièce conique ou tronconique, la pièce à usiner est immobile axialement et le déplacement axial dans le sens de l'outil est accompagné d'un mouvement radial vers l'axe central longitudinal de la pièce à usiner et le déplacement axial dans le sens de l'outil est accompagné d'un mouvement radial d'éloignement de l'axe central longitudinal de la pièce à usiner.

Le procédé selon l'invention offre généralement les avantages suivants :
- une diminution des interventions pour changer l'outil (burin ou taraud),
- une diminution de l'échauffement de l'outil,
- une application d'un effort identique sur les deux flancs du filet (coupe en opposition),
- une réduction des bavures à l'entrée et à la sortie du filetage/taraudage et/ou
- un retrait d'un éventuel amas de copeaux lors de la passe retour.

### Brève description des dessins

D'autres avantages et caractéristiques de l'invention vont maintenant être décrits en détail dans l'exposé suivant qui est donné en référence aux figures annexées, lesquelles représentent schématiquement :
Fig. 1 : les étapes classiques de réalisation d'un filetage ;
Figs. 2a et 2b : les étapes communes à un filetage traditionnel et à un filetage selon l'invention ;
Figs. 3 à 5 : des étapes successives du procédé selon l'invention ;
Figs. 6 à 10 : des systèmes d'outils mettant en oeuvre le procédé selon l'invention pour réaliser un filetage ;
Fig. 10 : la réalisation d'un filetage intérieur selon l'invention ; et
Fig. 11 : le détail d'un outil pour la réalisation du taraudage de la figure 10.

### Description détaillée

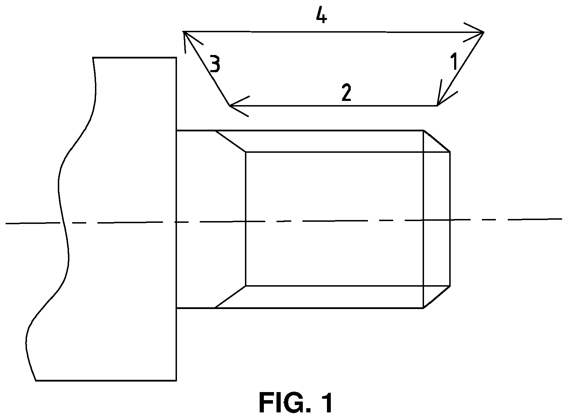

Sur la figure 1 est représenté un procédé classique de filetage d'une pièce. Les numéros indiquent les mouvements du burin dans l'ordre chronologique, soit globalement :
1 : le rapprochement de la pièce à usiner et entrée en contact avec la matière ;
2 : le déplacement suivant l'axe longitudinal de la pièce ;
3 : l'éloignement de la pièce ; et
4 : le retour au début du filet et retour à l'étape 1.

Le principe du procédé selon l'invention est bien différent. Il réside dans le fait que la matière est enlevée dans les deux sens, suivant un mouvement longitudinal correspondant à l'axe désigné généralement par Z- ou Z+.

Ceci permet d'éviter à l'outil de faire un déplacement à vide pour revenir au début du tronçon à fileter.

Selon l'invention, lorsque l'outil est au bout du filet, il est nécessaire de changer d'arête de coupe - car la coupe va s'effectuer dans l'autre sens de rotation - d'inverser le sens de rotation de la broche ou du mandrin, puis d'usiner en revenant au début du filet. Et ainsi de suite entre chaque passe.

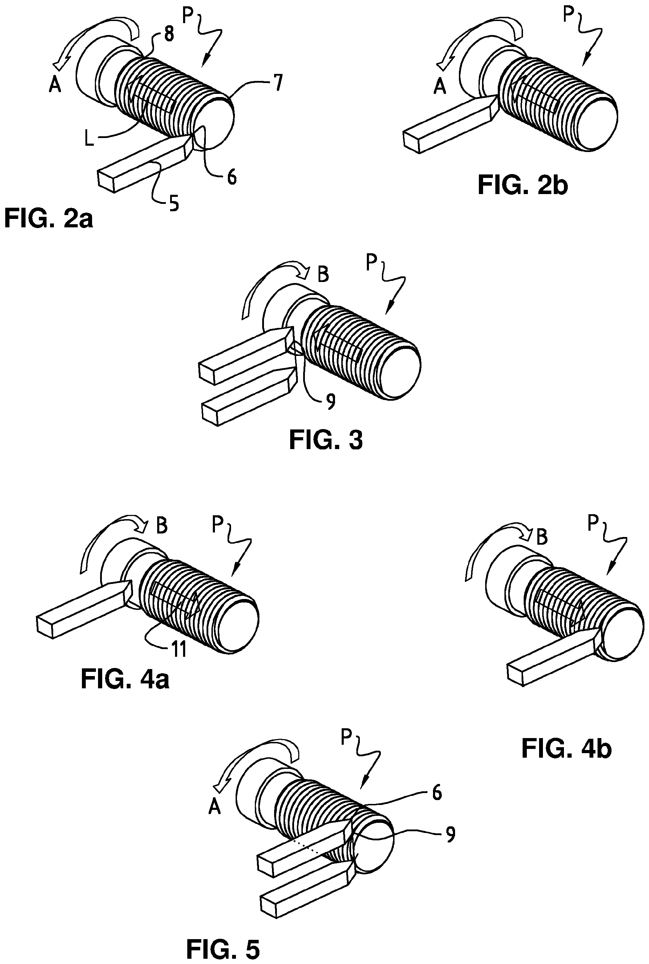

Un mode de réalisation de l'invention est représenté sur les figures 2 à 5. Il est mis en oeuvre sur un tour à commande numérique.

Les étapes 2a et 2b correspondent à des étapes communes à l'art antérieur et à l'invention.

Comme on peut le voir sur la figure 2a, on commence par entraîner en rotation la pièce à usiner P dans le sens A, puis on approche un outil 5, tel qu'un burin, de la pièce P, afin que son arête de coupe 6 affleure la surface à fileter de la pièce à usiner, au début 7 de la section à fileter, qui correspond sur la figure 2a à l'extrémité libre de la pièce P.

Ensuite, on déplace radialement le burin 5 afin que l'arête 6 pénètre dans la matière pour usiner la pièce P. On déplace le burin 5 dans le sens L suivant l'axe longitudinal de la pièce P, jusqu'à la fin 8 de la section à fileter. On se trouve alors dans la situation correspondant à la figure 2b. Par radialement, on se réfère ici à la section transversale de la pièce P.

Sur la figure 2a, la pièce P est immobile axialement et c'est le burin 5 qui se déplace. En variante, l'outil 5 pourrait être fixe et on pourrait déplacer la pièce P suivant son axe longitudinal, dans le sens M opposé au sens L.

Une fois que le burin 5 est arrivé à la fin 8 de la section à fileter, il est éloigné de la pièce P.

A partir de ce moment, la réalisation du filetage selon l'invention commence à se démarquer du filetage traditionnel.

En effet, selon l'invention, il faut alors inverser le sens de rotation de la pièce P.

Comme on peut le voir sur la figure 3 et conformément à ce mode de réalisation de l'invention, le burin 5 utilisé comporte une deuxième arête de coupe 9 située son extrémité verticale inférieure, sa première arête de coupe 6 se situant à son l'extrémité verticale supérieure.

L'éloignement du burin 5 de la pièce P est donc obtenu en déplaçant verticalement ce burin vers le haut, afin que sa première arête 6 s'éloigne également verticalement de la pièce P. En même temps, sa deuxième arête 9 vient en position de travail, c'est-à-dire pour qu'elle se situe horizontalement au même niveau que l'axe de rotation R de la pièce P.

Ensuite, la rotation de la pièce P est arrêtée puis cette pièce P est entraînée en rotation dans le sens B opposé au sens A.

Pour gagner du temps, la rotation est arrêtée dès que l'outil est suffisamment éloigné de la pièce P.

Une fois la deuxième arête 9 à la bonne hauteur, elle est approchée de la pièce P suivant un déplacement radial, avec un positionnement adéquat pour qu'elle pénètre dans le pas du filet.

Le positionnement doit être extrêmement précis afin que l'arête s'insère exactement entre deux parois de ce filet et ne le détruise pas. Une telle indexation est calculée de préférence par le logiciel pilotant le tour à commande numérique.

Ensuite, la deuxième arête 9 est déplacée davantage radialement afin de reprendre l'usinage du filet. Au même moment, comme cela est visible sur la figure 4a, l'outil P est déplacé dans le sens M opposé au sens L, jusqu'au début 7 de la section à fileter, la pièce P étant immobile axialement.

Comme précédemment, le burin 5 pourrait être fixe et la pièce P pourrait être déposée suivant son axe longitudinal, dans le sens M opposé au sens L.

Sur la figure 4b est représenté la situation où le burin 5 arrive au début 7 de la section à fileter.

Puis, comme on peut le voir sur la figure 5, le burin est éloigné de la pièce P par déplacement vertical, vers le bas cette fois-ci.

Sa deuxième arête 9 s'éloigne donc également verticalement de la pièce P et en même temps, la première arête de coupe 6 vient en position de travail, c'est-à-dire pour qu'elle se situe horizontalement au même niveau que l'axe de rotation R de la pièce P.

Ensuite, la rotation est arrêtée pour que la pièce P soit prête pour la rotation dans l'autre sens, le sens A.

On peut alors reprendre les opérations au stade de la figure 2a.

Tout ceci est répété, jusqu'à ce que le filetage atteigne ses dimensions finales.

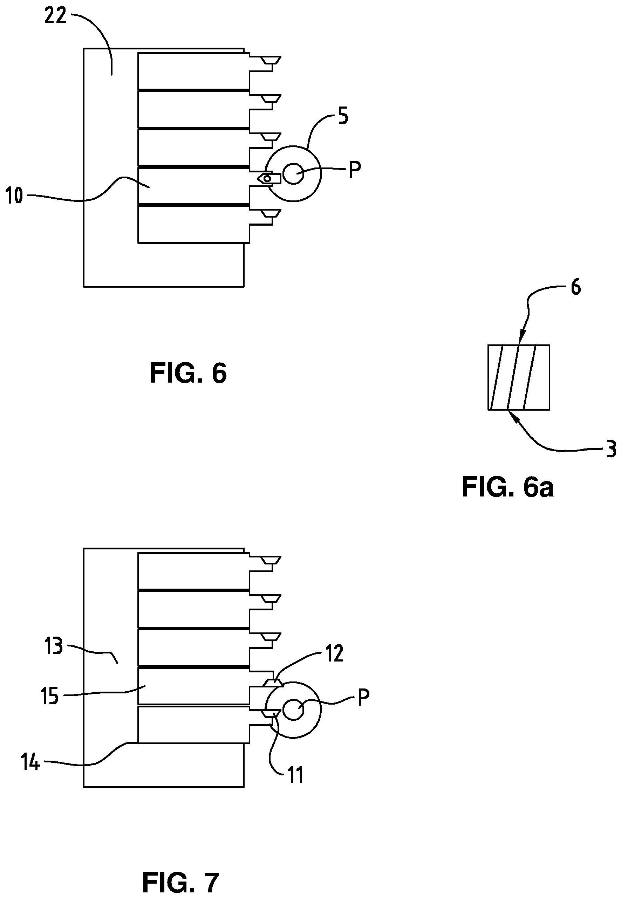

Comme on peut le voir sur la figure 6, le burin 5 peut être monté sur un porte-outils 10, lui-même étant supporté par un système d'outils 22.

La figure 6bis, en montrant l'outil en vue de face, fait apparaître une configuration des première et deuxième arêtes de coupe 6,9 du burin 5 de la figure 6.

Cependant, les première et deuxième arête 6,9 ne se trouvent pas nécessairement sur le même outil. Elles peuvent être sur des outils différents.

Sur la figure 7 est représenté un système d'outils 13, comportant plusieurs porte-outils 14,15. Deux outils 11,12 au moins sont prévus pour la réalisation d'un filetage, la première arête de coupe se trouvant alors sur un premier outil 11 et la deuxième arête de coupe sur un deuxième outil 12. Le passage de la première arête de coupe à la deuxième arête de coupe s'effectue grâce à une translation verticale vers le bas du deuxième outil 12.

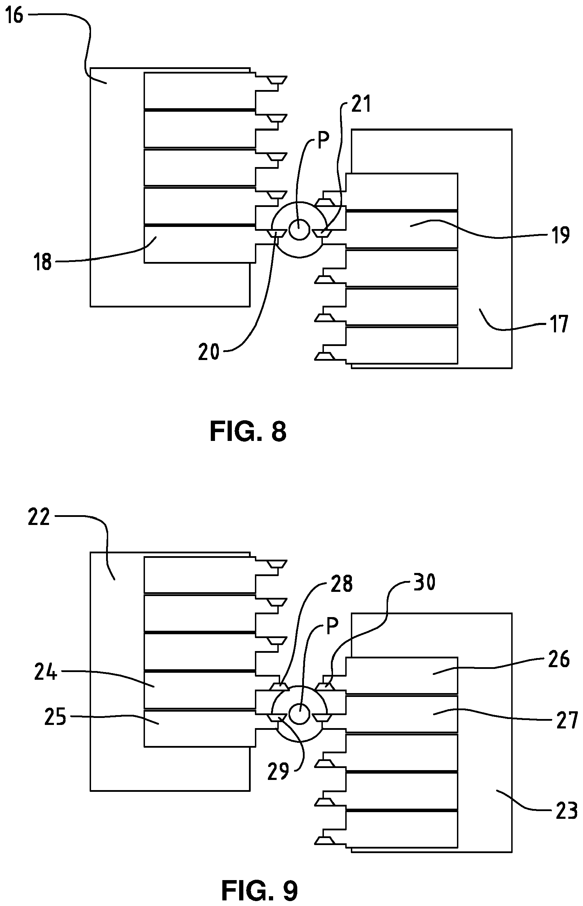

Sur la figure 8 sont représentés deux systèmes d'outils 16,17, comportant chacun plusieurs porte-outils 18,19. Deux outils 20,21 au moins sont prévus pour la réalisation d'un filetage, la première arête de coupe se trouve alors sur un premier outil 20 porté par un porte-outils 18 monté sur un premier système d'outils 16 et la deuxième arête de coupe sur un deuxième outil 21 porté par un porte-outils 19 monté sur un deuxième système d'outils 17. Les deux outils 20,21 sont de préférence diamétralement opposés.

Le passage de la première arête de coupe à la deuxième arête de coupe s'effectue donc au moyen de petits mouvements : le premier pour l'éloignement du premier outil 20 portant la première arête de coupe et le deuxième pour le rapprochement du deuxième outil 21 portant la deuxième arête de coupe de la pièce P. Ces mouvements peuvent même ne faire qu'un si c'est la broche porte pièce qui effectue le déplacement.

Sur la figure 9 est représenté un mode de réalisation de l'invention faisant appel à deux systèmes d'outils 22,23, sur chacun desquels sont montés deux porte-outils 24,25 et 26,27, chaque porte-outils 24,25,26,27 portant un outil 28,29,30,31 muni d'une arête de coupe destinée à la réalisation d'un filetage.

Lors de l'usinage, deux outils de préférence diamétralement opposés 29,30 ou 28,31 usinent simultanément la pièce P.

Dans un sens de rotation de la pièce P interviennent les arêtes de coupe des outils 29,30 et, dans l'autre sens, les arêtes de coupe des outils 28,31.

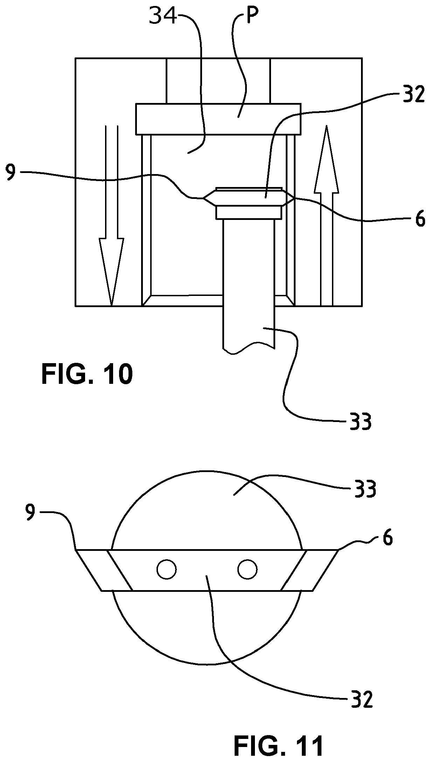

Les figures 10 et 11 concernent la réalisation d'un filetage intérieur.

Sur la figure 10, on aperçoit un outil 32 portant deux arêtes de coupe 6,9 permettant de fileter l'intérieur d'un alésage 34.

Comme on peut le déduire de la figure 10, dans un sens de déplacement longitudinal relatif de la pièce P par rapport à l'outil 32, une seule arête 6 est active, tandis que dans l'autre sens de déplacement longitudinal (axial), l'autre arête 9 est active. A chaque changement de sens de déplacement longitudinal correspond un changement de sens de rotation de la pièce P et un déplacement radial de l'outil 32 et de son porte-outil 33.

Pour la réalisation d'un filetage sur une pièce conique ou tronconique, le mouvement de déplacement relatif longitudinal de l'outil pour le creusement du filet est accompagné d'un mouvement relatif radial de l'outil qui suit la surface à fileter lors du mouvement «aller» similaire à celui symbolisé par la flèche L sur la figure 2a, puis d'un mouvement radial inverse lors du mouvement «retour» similaire à celui symbolisé par la flèche M sur la figure 4a.

Il va de soi que le procédé fonctionne dans n'importe quel plan selon l'orientation des systèmes d'outils. Par exemple, les mouvements horizontaux précités pourraient être verticaux ou en diagonale.

Ainsi, grâce à l'invention, il est possible de réduire le temps de filetage par rapport à un filetage traditionnel.

Bien entendu, le temps gagné diffère beaucoup d'une opération à l'autre, mais des essais ont montré qu'il est possible de réduire le temps de filetage de 30%.

Ces gains de temps sont déterminés en particulier au moyen des éléments suivants :
- la matière de la pièce à usiner,
- le temps de changement d'arête de coupe et/ou le temps d'inversion du sens de rotation de la broche/mandrin,
- le nombre de passes, et
- la longueur du filetage.

## Revendications

1. Procédé de réalisation d'un filetage sur une pièce à usiner cylindrique, conique ou tronconique, comprenant les étapes consistant à :
a) entraîner en rotation la pièce à usiner (P) dans un sens (A),
b) effectuer un déplacement relatif d'une première arête de coupe (6) d'un outil (5,11,20,29,32) par rapport à la pièce à usiner (P), jusqu'à ce que cette première arête de coupe (6) affleure la surface à fileter de la pièce à usiner (P), au début (7) de la section à fileter,
c) effectuer un déplacement relatif de l'outil (5,11,20,29,32) par rapport à la pièce afin que la première arête de coupe usine la pièce à usiner,
d) effectuer un déplacement relatif de l'outil (5,11,20,29,32) suivant l'axe longitudinal de la pièce à usiner (P), dans un sens (L) jusqu'à la fin (8) de la section à fileter,
e) éloigner par un déplacement relatif la première arête de coupe (6) de l'outil (5,11,20,29,32) de la pièce à usiner (P),
**caractérisé en ce q**u'il comprend en outre les étapes consistant à :
f) inverser la rotation de la pièce à usiner (P) pour entraîner cette pièce en rotation dans le sens (B) opposé au sens (A), tout en positionnant ou pas la seconde arête de coupe (9),
g) approcher par un déplacement relatif une deuxième arête de coupe (9) vers la pièce à usiner (P), jusqu'à ce que cette deuxième arête de coupe (9) pénètre dans le pas du filet,
h) effectuer un déplacement relatif de la deuxième arête de coupe (9) par rapport à la pièce à usiner (P) afin qu'elle poursuive l'usinage du filet dans cette pièce,
i) effectuer un déplacement relatif de la deuxième arête de coupe (9) dans un sens (M) opposé au sens (L), jusqu'au début de la section (8) à fileter,
j) éloigner par un déplacement relatif la deuxième arête de coupe (9) de la pièce à usiner (P),
k) inverser la rotation de la pièce à usiner (P), tout en positionnant ou pas la première arête de coupe (6) puis
l) répéter les étapes b) à k) en poursuivant l'usinage du filet, jusqu'à ce que le filetage atteigne ses dimensions finales, en positionnant à l'étape b) la première arête de coupe de telle manière qu'elle pénètre dans le pas du filet déjà usiné.

2. Procédé selon la revendication 1, dans lequel les première et deuxième arêtes de coupe (6,9) se trouvent sur le même outil (5,32).

3. Procédé selon la revendication 1, dans lequel la première arête de coupe (6) se trouve sur un premier outil (11,20,29) et la deuxième arête de coupe (9) sur un deuxième outil (12,21,28).

4. Procédé selon la revendication 3, dans lequel le premier outil (11,20,29) est porté par un premier porte-outils (14,18,25) et le deuxième outil (12,21,28) est porté par un deuxième porte-outils (15,19,24).

5. Procédé selon la revendication 4, dans lequel le premier porte-outils (14,25) et le deuxième porte-outils (15,24) sont montés sur le même ensemble d'outils (13,22).

6. Procédé selon la revendication 4, dans lequel le premier porte-outils (18) est monté sur un premier ensemble d'outils (16) et le deuxième porte-outils (19) est monté sur un deuxième ensemble d'outils (17,23).

7. Procédé selon la revendication 5, dans lequel un troisième outil (30) avec une troisième arête de coupe et un quatrième outil (31) avec une quatrième arête de coupe sont prévus sur un deuxième ensemble d'outils (23), les premier (29) et troisième (30) outils fonctionnant simultanément et de la même manière, tout comme les deuxième (28) et quatrième (31) outils.

8. Procédé selon l'une des revendications 1 à 7, dans lequel, dans le cas d'une pièce conique ou tronconique, le mouvement de déplacement relatif longitudinal de l'outil pour le creusement du filet est accompagné d'un mouvement relatif radial de l'outil qui suit la surface à fileter, lors du mouvement «aller», puis d'un mouvement radial inverse lors du mouvement «retour».

9. Utilisation du procédé selon l'une des revendications 1 à 8, pour la réalisation d'un filetage extérieur.

10. Utilisation du procédé selon l'une des revendications 1 à 8, pour la réalisation d'un filetage intérieur.

## Patentansprüche

1. Verfahren zur Herstellung eines Gewindes an einem zylindrischen, konischen oder kegelstumpfförmigen Werkstück, umfassend die Schritte:
a) Drehen des Werkstücks (P) in einer Richtung (A);
b) Bewegen einer ersten Schneidkante (6) eines Werkzeugs (5, 11, 20, 29, 32) relativ zu dem Werkstück (P) bis die erste Schneidkante (6) an der mit einem Gewinde zu versehenden Oberfläche des Werkstücks (P) am Anfang (7) des mit einem Gewinde zu versehenden Abschnitts anliegt;
c) Bewegen des Werkzeugs (5, 11, 20, 29, 32) relativ zu dem Stück, so dass die erste Schneidkante das Werkstück bearbeitet;
d) Relatives Bewegen des Werkzeugs (5, 11, 20, 29, 32) entlang der longitudinalen Achse des Werkstücks (P) in einer Richtung (L) bis zum Ende (8) des mit einem Gewinde zu versehenden Abschnitts;
e) Relatives Bewegen der ersten Schneidkante (6) des Werkzeugs (5, 11, 20, 29, 32) weg von dem Werkstück (P),
**dadurch gekennzeichnet, dass** es weiterhin die folgenden Schritte umfasst:
f) Umkehren der Drehung des Werkstücks (P), um das Stück in einer Richtung (B) entgegengesetzt zu der Richtung (A) zu drehen, wobei die zweite Schneidkante (9) positioniert ist oder nicht;
g) Annähern einer zweiten Schneidkante (9) durch eine Relativbewegung an das Werkstück (P) bis die zweite Schneidkante (9) in die Gewindesteigung eindringt;
h) Bewegen der zweiten Schneidkante (9) relativ zum Werkstück (P), so dass die Bearbeitung des Gewindes an dem Stück fortgesetzt wird;
i) Relatives Bewegen der zweiten Schneidkante (9) in einer zu der Richtung (L) entgegengesetzten Richtung (M) bis zu dem Anfang des mit einem Gewinde zu versehenden Abschnitts (8);
j) Relatives Bewegen der zweiten Schneidkante (9) weg von dem Werkstück (P);
k) Umkehren der Drehung des Werkstücks (P), wobei die erste Schneidkante (6) positioniert ist oder nicht;
I) Wiederholen der Schritte b) bis k) zur Bearbeitung des Gewindes, bis das Gewinde seine Endabmessungen erreicht, wobei in Schritt b) die erste Schneidkante so positioniert ist, dass sie in die Steigung des vorhergehend bearbeiteten Gewindes eindringt.

2. Verfahren nach Anspruch 1, wobei sich die erste und die zweite Schneidkante (6, 9) auf demselben Werkzeug (5, 32) befinden.

3. Verfahren nach Anspruch 1, wobei sich die erste Schneidkante (6) auf einem ersten Werkzeug (11, 20, 29) befindet und die zweite Schneidkante (9) auf einem zweiten Werkzeug (12, 21, 28) befindet.

4. Verfahren nach Anspruch 3, wobei das erste Werkzeug (11, 20, 29) von einem ersten Werkzeughalter (14, 18, 25) gehalten wird und das zweite Werkzeug (12, 21, 28) von einem zweiten Werkzeughalter (15, 19, 24) gehalten wird.

5. Verfahren nach Anspruch 4, wobei der erste Werkzeughalter (14, 25) und der zweite Werkzeughalter (15, 24) auf einem gemeinsamen Werkzeugsatz (13, 22) montiert sind.

6. Verfahren nach Anspruch 4, wobei der erste Werkzeughalter (18) an einem ersten Werkzeugsatz (16) und der zweite Werkzeughalter (19) an einem zweiten Werkzeugsatz (17, 23) montiert sind.

7. Verfahren nach Anspruch 5, wobei ein drittes Werkzeug (30) mit einer dritten Schneidkante und ein viertes Werkzeug (31) mit einer vierten Schneidkante auf einem zweiten Werkzeugsatz (23) vorgesehen sind, wobei die ersten (29) und dritten (30) Werkzeuge simultan und auf die gleiche Weise arbeiten wie die zweiten (28) und vierten (31) Werkzeuge.

8. Verfahren nach einem der Ansprüche 1 bis 7, wobei im Falle eines konischen oder kegelstumpfförmigen Werkstücks die relative Längsbewegung des Werkzeugs, um in das Gewinde einzudringen, von einer relativen Radialbewegung des Werkzeugs begleitet wird, die der mit einem Gewinde zu versehenden Oberfläche während der Bewegung nach «vorwärts» und dann eine umgekehrte Radialbewegung während einer Bewegung nach «rückwärts» folgt.

9. Verwendung des Verfahrens gemäss einem der Ansprüche 1 bis 8 zur Herstellung eines Aussengewindes.

10. Verwendung des Verfahrens gemäss einem der Ansprüche 1 bis 8 zur Herstellung eines Innengewindes.

## Claims

1. Method of making a thread on a cylindrical, conical or frustoconical workpiece, comprising the steps of:
a) driving in rotation the workpiece (P) in one direction (A),
b) carrying out a relative displacement of a first cutting edge (6) of a tool (5, 11, 20, 29, 32) relative to the workpiece (P) until this first cutting edge (6) is flush with the surface to be threaded of the workpiece (P) at the beginning (7) of the section to be threaded,
c) carrying out a relative displacement of the tool (5, 11, 20, 29, 32) relative to the workpiece so that the first cutting edge machines the workpiece,
d) carrying out a relative displacement of the tool (5, 11, 20, 29, 32) along the longitudinal axis of the workpiece (P), in one direction (L) until the end (8) of the section to be threaded,
e) moving away, by a relative displacement, the first cutting edge (6) of the tool (5, 11, 20, 29, 32) from the workpiece (P),
**wherein** it further comprises the steps of:
f) reversing the rotation of the workpiece (P) to drive this piece in rotation in the direction (B) opposite to the direction (A), while positioning or not the second cutting edge (9),
g) moving, by relative displacement, a second cutting edge (9) towards the workpiece (P) until this second cutting edge (9) penetrates the thread pitch,
h) carrying out a relative displacement of the second cutting edge (9) relative to the workpiece (P) so that it continues the machining of the thread in this piece,
i) carrying out a relative displacement of the second cutting edge (9) in a direction (M) opposite to the direction (L), until the beginning of the section (8) to be threaded,
j) moving, by a relative displacement, the second cutting edge (9) away from the workpiece (P),
k) reversing the rotation of the workpiece (P), while positioning or not the first cutting edge (6), and
l) repeating steps b) to k), while continuing the machining of the thread, until the thread reaches its final dimensions, while positioning the first cutting edge in step b) in such a way that it penetrates the thread pitch already machined.

2. Method according to claim 1, wherein the first and second cutting edges (6, 9) are located on the same tool (5, 32).

3. Method according to claim 1, wherein the first cutting edge (6) is located on a first tool (11, 20, 29) and the second cutting edge (9) on a second tool (12, 21, 28).

4. Method according to claim 3, wherein the first tool (11, 20, 29) is carried by a first tool holder (14, 18, 25) and the second tool (12, 21, 28) is carried by a second tool holder (15, 19, 24).

5. Method according to claim 4, wherein the first tool holder (14, 25) and the second tool holder (15, 24) are mounted on the same tool set (13, 22).

6. Method according to claim 4, wherein the first tool holder (18) is mounted on a first tool set (16) and the second tool holder (19) is mounted on a second tool set (17, 23).

7. Method according to claim 5, wherein a third tool (30) with a third cutting edge and a fourth tool (31) with a fourth cutting edge are provided on a second tool set (23), the first (29) and third (30) tools operating simultaneously and in the same manner, just as do the second (28) and fourth (31) tools.

8. Method according to one of the claims 1 to 7, wherein, in the case of a conical or frustoconical workpiece, the movement of relative longitudinal displacement of the tool for digging the thread is accompanied by a relative radial movement of the tool which follows the surface to be threaded, during the "outward" movement, and then by a reverse radial movement during the "return" movement.

9. Use of the method according to one of the claims 1 to 8, for producing an external thread.

10. Use of the method according to one of the claims 1 to 8, for producing an internal thread.
